# EUROPEAN PATENT APPLICATION

(11) **EP 1 626 067 A1**
(43) Date of publication of application: **15.02.2006**
(21) Application number: 04077264.2
(22) Date of filing: 10.08.2004
(51) Int. Cl.: C08L 5/04, C08K 3/34

(54) **Biodegradable ceramic-polymer composite**

(71) Applicant: Nederlandse Organisatie voor Toegepast-Natuurwetenschappelijk Onderzoek TNO, 2628 VK Delft (NL)
(72) Inventor: van Ee, Renz Jeroen, 3991 XV Houten (NL); Fischer, Sabine, 5731 TP Mierlo (NL)
(74) Representative: Winckels, Johannes Hubertus F.

(57) **Abstract**

The invention provides a ceramic-polymer composite comprising inorganic nano-particles that are contained within a network of a natural polymer which network is formed by means of ionogenic interactions. The invention also provides (medical) articles manufactured from the present composite. In addition, the invention also relates to a method for preparing said composite, wherein a mixture which comprises inorganic nano-particles, a natural polymer and a solvent is added to a solution which comprises an agent that facilitates the formation of the network of the natural polymer.

## Description

The present invention relates to a biodegradable ceramic-polymer composite and to a method for preparing it.

A variety of inorganic materials is nowadays used as insulation material and flame retardant material in industry and especially for construction purposes. Conventional inorganic materials such as rockwool and glass fibres are however associated with several problems. Firstly, these materials are artificial and not degradable, which makes their application from environmental perspective questionable. Secondly, their production is energy intensive. In addition, these materials need to be handled with proper care since they give raise to skin irritation.

In view of the above, there is clearly room to develop more attractive products for use as insulation or flame retardant materials.

Object of the present invention is to provide a product that can suitably be used as an insulation material or a flame retardant material, and which deals with the above problems.

Surprisingly, it has now been found that this object can be established when use is made of a product comprising nano-particles of an inorganic material which particles are contained in a particular network of a natural polymer.

Accordingly, the present invention relates to a ceramic-polymer composite comprising inorganic nano-particles that are contained within a network of a natural polymer which network is formed by means of ionogenic interactions.

The composites of the present invention display excellent isolation and flame retardant properties, and do not produce toxic fumes during thermal degradation. In addition, they are easy to make; their production is less energy intensive when compared to conventional materials; they are biodegradable; they are highly flexible and maintain their strength; and they are user-friendly in the sense that they can be handled without special care, like the use of gloves, since they do not cause skin irritation.

Hence, it will be clear that the composites in accordance with the present invention constitute a significant improvement over the known materials.

Suitably, in the composite according to the present invention the inorganic nano-particles are present in an amount of at least 25% by weight, based on total composite.

Preferably, the inorganic nano-particles are present in an amount in the range of from 50 - 90% by weight, based on total composite.

More preferably, the inorganic nano-particles are present in an amount in the range of from 60-75% by weight, based on total composite.

One of the surprising aspects of the present invention is that the composites according to the present invention can suitably contain large amounts of inorganic material, whilst displaying a high flexibility and maintaining strength over a long period of time.

The natural polymer to be used in accordance with the present invention can suitably be chosen from the groups of (hetero)polysaccharides, polypeptides and proteins.

The composite of the present invention can suitably comprise one or more types of natural polymer. Preferably, however, the composite comprises one type of natural polymer.

Suitable natural polymers include starches, celluloses, chitosans, alginates, inulins, pectins, caseins and derivatives thereof. Derivatives that may be used are for example esters, such as acetylated starch, or carboxymethylated cellulose, and ethers, such as hydroxypropylated starch. Specific examples include acetylated starch and hydroxypropylated cellulose.

Preferred polysaccharides include chitosans, aliginates, pectins, modified starches, whey proteins, caseins, gelatines, and mixtures of two or more of these compounds. Preferably, the natural polymer comprises one or more aliginates. More preferably, the natural polymer comprises one type of aliginate.

An advantage of the use of such natural polymers is that they are biodegradable and not inflammable. In the context of the invention, a biodegradable material is a material, which, in a biological environment, degrades to compounds, which are preferably water soluble and non-toxic. The degradation may proceed under influence of air, water, soil and/or microorganisms.

The composite according to the present invention comprises inorganic nano-particles. In the context of the present invention, a nano-particle is a particle having in at least one direction a length in the range of nanometers.

A wide variety of inorganic nano-particles can be used in the composition of the present invention. The inorganic nano-particles may have been derived from one or more types of inorganic material. Preferably, however, the inorganic nano-particles are derived from one type of inorganic material. Suitable inorganic nano-particles include those derived from a smectite-like clay mineral, a kaolinite, a hydroxyapatite or other biocompatible calciumphosphates, a hydrotalcite or a metal oxide. Preferably, the inorganic nano-particles are derived from a montmorrillonite.

The nano-particles can suitably be derived from a clay having a layered structure and a cation exchange capacity of from 30 to 250 milliequivalents per 100 gram. When this capacity exceeds the above upper limit, it proves difficult to finely disperse the clay on a molecular level because of the strong mutual interaction of the clay layers. When the cation exchange capacity is lower than the above lower limit, it turns out that the clay is hard to modify, owing to the fact that the interaction with the natural polymer is small. Preferably, a clay having a cation exchange capacity of from 50 to 200 milliequivalents per 100 gram is used.

If a clay having a layered structure and a cation exchange capacity of from 30 to 250 milliequivalents per 100 gram is used, and the natural polymer happens to contain hydrophobic groups, such as acetyl, alkylcarboxyl or arylcarboxyl ester groups, the clay may first be ion exchanged with a modifying agent, such as an onium ion. Suitable examples of onium ions include ammonium, phosphonium and sulfonium ions. This modification, which is known for incorporation of clay into other materials, has the goal to compatabilize the layers of the clay with the natural polymer. It utilizes suitable surfactants in an ion exchange reaction. The surfactant should have an onium functionality in addition to a functionality compatible with the natural polymer, such as one or more OH groups, COOH groups and the like. Preferably, the surfactant has alkyl chains with a length ranging from a number of 6 to 22 carbon atoms. The surfactant will typically be employed in an amount of from 5 to 70 wt.%, preferably from 20 to 40 wt.%, with respect to the clay.

Suitable clay types based on layered silicates that can be used in accordance with the present invention, such as layered phyllosilicate are composed of magnesium and/or aluminum silicate layers, with a thickness between 0.7 and 1.2 nm. Especially preferred are smectite-like clay minerals, such as montmorillonite, saponite, hectorite, fluorohectorite, beidellite, nontronite, vermiculite, halloysite and stevensite. These materials impart very favourable mechanical properties and a great heat resistance to a biodegradable thermoplastic material.

The composite according to the present invention is suitable for the production of various articles of manufacture. Examples of suitable applications of the material include fibres, coatings, films, packaging materials, carrier materials, construction materials and the like. The present compositions are especially useful in isolation and/or flame retardant materials to be used in the building industry. The invention accordingly further relates to articles manufactured from the composite according to the present invention.

The present invention also relates to medical articles manufactured from the composite according to the present invention, wherein the inorganic nano-particles are derived from a hydroxyapatite or another biocompatible calcium phosphate. A suitable medical article is for instance suture.

The present invention further relates to a method for preparing the composite according to the present invention, wherein a mixture which comprises inorganic nano-particles, a natural polymer and a solvent is added to a solution which comprises an agent that facilitates the formation of the network of the natural polymer.

The mixture comprising the inorganic nano-particles, the natural polymer and the solvent can be prepared by mixing these ingredients, preferably in a kneader or in an extruder. Preferably, temperatures are used ranging from 10 to 200°C, more preferably from 18 to 180°C.

Suitably, the agent facilitates multivalent interactions between ionogenic groups of the natural polymer.

Preferably, the agent comprises multivalent ions. Preferably, the multivalent ions are cations.

Suitably, the agent is an inorganic agent. Suitable agents include calcium salts, barium salts, aluminium salts, magnesium salts but also di-and polyamines and imines but also phosphates, sulphates, carbonates and also di-and polycarboxylic acids, di and polysulfonium compounds and mixtures of these. Also possible are betaines and other substances compromising different ionic groups as well as di-and polypeptides and proteins. Preferably, the agent comprises calcium salts, carbonates, phosphates or polypeptides.

Preferably, the method according to the present invention is a solution spinning process, which type of process is as such well known to the skilled person.

From the fibres obtained with such a solution spinning process various types of articles can subsequently be made, such as building elements for isolation and/or flame retardancy purposes.

The composite according to the present invention may further comprise any conventional additives, such as pigments, stabilizers, processing aids, aroma substances, anti-fouling agents and the like.

Under specific circumstances, it may be desired that the material comprises a compatibilizing agent that assists in providing an optimal combination of the inorganic nano-particles and the natural polymer.

The invention will now be further elucidated by the following, non-restrictive examples.

### Examples

### Preparation a 5wt% sodium-alginate solution:

75g sodium-alginate (from brown algae, Fluka) is added slowly to 1425 g water at 60°C under stirring (mechanical stirrer) in a reactor. The solution is kept stirring at 60°C for 4 hours or longer till all sodium-alginate is dissolved.

### Preparation of a 5wt% clay solution:

50g Südchemie EXM 757 clay is added to 950 g water, the mixture is stirred with a magnetic bar for minimal one night, preferably over 3 nights.

### Preparation of the sodium-alginate / clay solution:

### a) 50/50 wt/wt% sodium-alginate / clay solution

50g of the 5wt% sodium-alginate solution is added to 50g of the 5wt% clay solution and mixed to a homogeneous solution.

### b) 30/70 sodium-alginate / clay solution

30g of the 5wt% sodium-alginate solution is added to 70g of the 5wt% clay solution and mixed to a homogeneous solution

### Preparation of 1, 2, 3, 4 wt% calcium chloride solutions:

10g/20g/30g/40g CaCl₂ is added to 990g/980g/970g/960g water, the mixture is stirred with a magnetic bar till all CaCl₂ is dissolved.

### Preparation of sodium-alginate / clay fibres:

20ml of the 50/50 wt/wt% sodium-alginate/clay solution and 20ml of the a 70/30 wt/wt% sodium-alginate / clay solution were respectively put into a 20 ml syringe with a 2 mm hole and spun into 100ml of a 1, 2, 3 or 4wt% CaCl₂ solution. The prepared fibres stay in the used CaCl₂ solution for one night after which they are dried in air at room temperature.

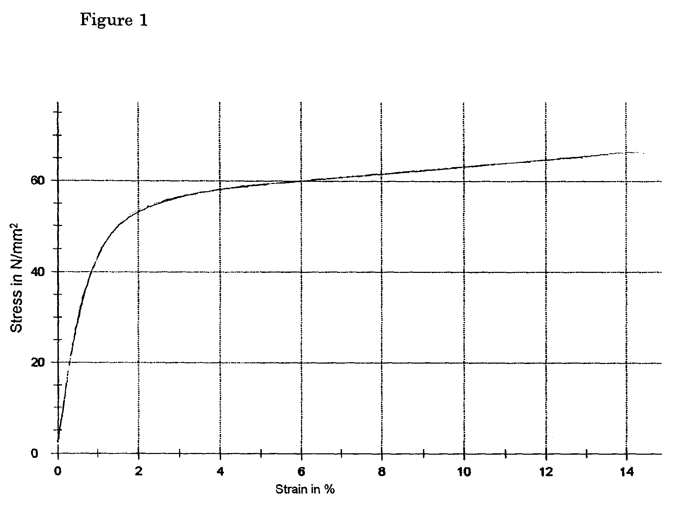

Subsequently, the flexibility of the fibres that were obtained from the 50/50 wt/wt% sodium-alginate/clay solution was determined using a tensile testing machine. From the results shown in Figure 1, it will be clear that the fibres obtained in accordance with the present invention displayed an excellent flexibility.

## Claims

1. A ceramic-polymer composite comprising inorganic nano-particles that are contained within a network of a natural polymer which network is formed by means of ionogenic interactions.

2. A composite according to claim 1, wherein the inorganic nano-particles are present in an amount of at least 25% by weight, based on total composite.

3. A composite according to claim 2, wherein the inorganic nano-particles are present in an amount in the range of from 50 - 90% by weight, based on total composite.

4. A composite according to claim 3, wherein the inorganic nano-particles are present in an amount in the range of from 60-75% by weight, based on total composite.

5. A composite according to any one of claims 1-4, wherein the natural polymer is chosen from one or more of the groups of (hetero)polysaccharides, polypeptides and proteins.

6. A composite according to any one of claims 1-5, wherein the natural polymer is chosen from one or more of the groups of chitosans, alginates, pectins, modified starches, whey proteins, caseins, and gelatines.

7. A composite according to claim 6, wherein the natural polymer comprises an alginate.

8. A composite according to any one of claims 1-7, wherein the inorganic nano-particles are derived from a smectite-like clay mineral, a kaolinite, a hydroxyapatite or another biocompatible calciumphoshate, a hydrotalcite or a metal oxide.

9. A composite according to claim 8, wherein the inorganic nano-particles are derived from a montmorrillonite.

10. An article manufactured from a composite according to any one of claims 1-9.

11. A medical article manufactured from a composite according to any one of claims 1-9, wherein the inorganic nano-particles are derived from a hydroxyapatite or other biocompatible calcium phosphates.

12. A method for preparing a composite according to any one of claims 1-9, wherein a mixture which comprises inorganic nano-particles, a natural polymer and a solvent is added to a solution which comprises an agent that facilitates the formation of the network of the natural polymer.

13. A method according to claim 12 or 13, wherein the agent facilitates multivalent interactions between ionogenic groups of the natural polymer.

14. A method according to claim 13, wherein the agent comprises multivalent ions.

15. A method according to claim 14, wherein the multivalent ions are cations.

16. A method according to claim 12, wherein the agent is an inorganic agent.

17. A method according to any one of claims 12-15, wherein the method is a solution spinning process.
